# EUROPÄISCHE PATENTSCHRIFT

(11) **EP 1 164 060 B1**
(45) Veröffentlichungstag und Bekanntmachung des Hinweises auf die Patenterteilung: **28.12.2005**
(21) Anmeldenummer: 01113558.9
(22) Anmeldetag: 13.06.2001
(51) Int. Cl.: B60R 21/16, B60R 21/20

(54) **Beifahrer-Gassack-Schutzeinrichtung**
Airbag protection device for a vehicle passenger
Dispositif de protection de passager de véhicule par coussin gonflable

(30) Priorität: 16.06.2000 DE 20010726 U; 13.07.2000 DE 20012077 U; 28.12.2000 DE 10065461
(43) Veröffentlichungstag der Anmeldung: 19.12.2001
(73) Patentinhaber: TRW Automotive Safety Systems GmbH, 63743 Aschaffenburg (DE)
(72) Erfinder: Bieber, Udo, 63843 Niedernberg (DE); Neupert, Ralph, 63839 Kleinwallstadt (DE)
(74) Vertreter: Kitzhofer, Thomas

(56) Entgegenhaltungen:
- DE-A- 4 010 767
- DE-A- 19 816 080
- DE-U- 29 510 775
- US-A- 5 549 326
- US-A- 5 945 184
- US-A- 6 042 147

## Beschreibung

Die Erfindung betrifft eine Beifahrer-Gassack-Schutzeinrichtung nach dem Oberbegrift des Anspruchs 1.

Solche, vom Beifahrer aus gesehen eine im wesentlichen ovale Außenkontur aufweisenden Gassäcke sollen eine möglichst große Rückhaltefläche, d.h. eine möglichst große Vorderwand aufweisen, auf die der Insasse im Rückhaltefall prallt. Der mittlere Bereich der Vorderwand, im folgenden Zentrumsabschnitt genannt, kann, wenn der Insasse zu nahe am Armaturenbrett sitzt, mit hoher Geschwindigkeit auf den Insassen prallen, da dieser Abschnitt der am höchsten beschleunigte ist.

Aus der DE 198 16 080 A1, die als nächstkommender Stand der Technik angesehen wird, ist ein Airbagmodul mit einem Mehrkammergassack bekannt, bei dem zwei kreisförmige Einbuchtungen gezeigt sind.

Die DE 40 10 797 A1 beschreibt ein Fahrerairbagmodul, bei dem die komplette Abdeckkappe beim Aufblasen in Richtung des Insassen bewegt wird und an Fangbändern gehalten ist, wodurch sich eine nicht bis an das Modul reichende Einbuchtung ergibt.

Bei Fahrer-Gassäcken gibt es bereits Ideen, den Zentrumsabschnitt als Einbuchtung auszubilden, wobei der Zentrumsabschnitt der Vorderwand auf einer Kreisfläche bleibend am Gassackmodul befestigt ist. Die Übertragung solcher Gestaltungen von Fahrer-Gassäcken auf Beifahrer-Gassäcke ist jedoch mit folgendem Problem verbunden: Die Beifahrer-Gassäcke haben eine deutlich größere Tiefe als die Fahrer-Gassäcke. Von der Seite gesehen haben die Beifahrer-Gassäcke im aufgeblasenen Zustand eine sich zum Insassen aufweitende Gestalt, d.h. die Höhe des Gassacks nimmt stetig zu. Würde nun eine Kreisfläche (Zentrumsabschnitt) bleibend am Gassackmodul befestigt werden, so ist zu erwarten, daß sich die Einbuchtung zum Insassen trichterförmig aufweitet, wodurch im Zentrum der Vorderwand aber keine ausreichend große Rückhaltefläche zur Verfügung stünde, wenn der Insasse die gewünschte mittige Sitzposition hat.

Die Erfindung schafft eine Beifahrer-Gassack-Schutzeinrichtung, die sich durch eine gute Rückhaltung unterschiechlich positioniertes Beifahrer auszeichnet. Dies wird bei einer Schutzeinrichtung mit den Merkmalen des Anspruchs 1 erreicht. Bei der erfindungsgemäßen Schutzeinrichtung hat der Beifahrer-Gassack ebenfalls eine ringförmige Aufblaskammer mit einer Einbuchtung. Die Einbuchtung ist jedoch am Übergang zu dem von außen sichtbaren Teil der Vorderwand schlitzartig ausgeführt, wobei diese Ausbildung erlaubt, daß die oberen und unteren Abschnitte der Ringkammer sich aufeinander zu bewegen und einander berühren, so daß die Vorderwand im aufgeblasenen Zustand sich zum Insassen nahezu vollständig geschlossen präsentiert, obwohl die Einbuchtung nach wie vor vorhanden ist.

Gemäß der bevorzugten Ausführungsform ist der Gassack Teil eines Gassack-Moduls, welches eine Modulabdeckung aufweist, die beim Aufblasen des Gassacks geöffnet wird. Der Zentrumsabschnitt ist unterhalb eines Teils der Modulabdeckung am Modul mittels der Rückhalteeinrichtung befestigt, so daß die Modulabdeckung nicht komplett nach außen geschwenkt werden muß, sondern im Bereich oberhalb des Zentrumabschnitts stehenbleiben kann. Die als Klappe ausgebildete Fläche der Modulabdeckung kann damit geringer sein als im Stand der Technik, was die Verzögerungswerte durch die aufzuschwenkende Modulabdeckung verringert.

Vorzugsweise gibt die Modulabdeckung beim Aufblasen deshalb eine oval ringförmige Austrittsöffnung für den Gassack frei.

Der Gassack ist vorzugsweise durch eine Gassackwand definiert, die die Vorderwand aufweist, wobei die Gassackwand eine durchgehende Gewebebahn aufweist, die eine Rückwand, die Vorderwand und die Einbuchtung bildet und die seitlich geschlossen ist. Durch diese Ausführung kann die Gassackwand aus möglichst wenig Einzelteilen bestehen. Das seitliche Schließen der durchgehenden Gewebebahn kann einerseits dadurch erfolgen, daß ihre Ränder vernäht sind und andererseits dadurch, daß an der Seite separate, mit ihr verbundene Seitenwände vorgesehen sind.

Das Schließen der Einbuchtung erfolgt vorzugsweise durch an die Einbuchtung angrenzende, im Inneren des Gassacks vorgesehene Fangbänder. Die Fangbänder sind so kurz ausgeführt, daß gegenüberliegende Wandungsabschnitte der Einbuchtung im aufgeblasenen Zustand des Gassacks aneinanderliegen und die Einbuchtung wenigstens abschnittsweise schließen.

Weitere Merkmale und Vorteile der Erfindung ergeben sich aus der nachfolgenden Beschreibung und aus den nachfolgenden Zeichnungen, auf die Bezug genommen wird. In den Zeichnungen zeigen:
- Fig. 1: eine Draufsicht auf ein Armaturenbrett mit einer darin angeordneten Schutzeinrichtung nach der Erfindung,
- Fig. 2: eine Längsschnittansicht durch die Schutzeinrichtung nach Fig. 1 bei aufgeblasenem Gassack,
- Fig. 3: eine Ansicht vom Beifahrer aus auf den aufgeblasenen Gassack nach Fig. 2,
- Fig. 4: eine Ansicht entsprechend Fig. 2 einer zweiten Ausführungsform der Schutzeinrichtung,
- Fig. 5: eine Ansicht entsprechend Fig. 2 einer dritten Ausführungsform der Schutzeinrichtung und
- Fig. 6: eine Ansicht vom Beifahrer aus auf den Gassack nach Fig. 5.

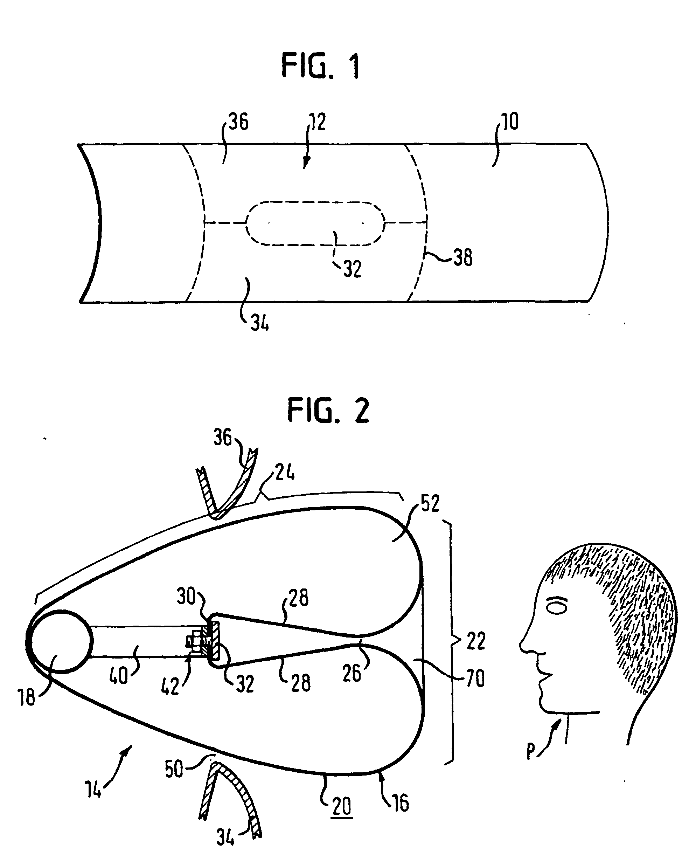

In Fig. 1 ist das Armaturenbrett 10 im Bereich des Beifahrers eines Fahrzeugs dargestellt. In das Armaturenbrett, genauer gesagt in die vom Innenraum sichtbare Abdeckung, ist eine Abdeckung 12 für eine versteckt eingebaute Beifahrer-Gassack-Schutzeinrichtung integriert. Die Schutzeinrichtung weist ein Gassackmodul 14 (sh. Fig. 2) auf, das von der Modulabdeckung 12 im nicht aktivierten Zustand verdeckt wird. Das Gassackmodul weist einen Gassack 16 und einen im Inneren des Gassacks 16 angeordneten Gasgenerator 18 auf. Der Gassack 16 wird durch eine Gassackwand 20, bestehend aus mehreren Abschnitten, definiert. Ein Abschnitt ist die sogenannte Vorderwand 22, die dem Beifahrer P bei aufgeblasenem Gassack zugewandt ist und auf die dieser im Rückhaltefall trifft. Von der Vorderwand 22 geht zu allen Seiten eine Rückwand 24 aus, die sich bis hinter den Gasgenerator 18 erstreckt. Die Vorderwand weist eine nach außen auslaufende Einbuchtung 26 auf, wobei die Wandungsabschnitte, die die Einbuchtung bilden, im folgenden mit 28 bezeichnet werden sollen. Ein Zentrumabschnitt, also ein mittlerer ovaler Flächenabschnitt der Vorderwand 22, welcher ebenfalls die Einbuchtung bildet, sogar deren tiefsten Abschnitt, wird mit 30 bezeichnet.

Die Modulabdeckung 12 besteht ebenfalls aus verschiedenen Abschnitten, nämlich einem ovalen Mittelteil 32 und zwei schwenkbaren Klappenabschnitten 34, 36, die das Mittelteil 32 umgeben. Mittelteil 32 und Klappenabschnitte 34, 36 sind durch verdeckte Aufreißlinien 38 voneinander getrennt. Der Mittelteil 32 ist bleibend am Modul befestigt, so daß er nicht wie die Klappenabschnitte 34, 36 beim Aktivieren des Moduls nach außen schwenken kann. Zur Befestigung des Mittelteils 32 geht vom Gasgenerator 18 eine Brücke 40 in Richtung Mittelteil 32 aus. Über eine Rückhalteeinrichtung 42 in Form von Schrauben-Muttern-Befestigungen wird der Mittelteil 32 mit der Brücke 40 verschraubt, wobei zwischen Mittelteil 32 und Brücke 40 der Zentrumsabschnitt 30 geklemmt und damit bleibend am Gassackmodul befestigt wird. Der Zentrumsabschnitt 30 ist deckungsgleich mit dem darüberliegenden Mittelteil 32.

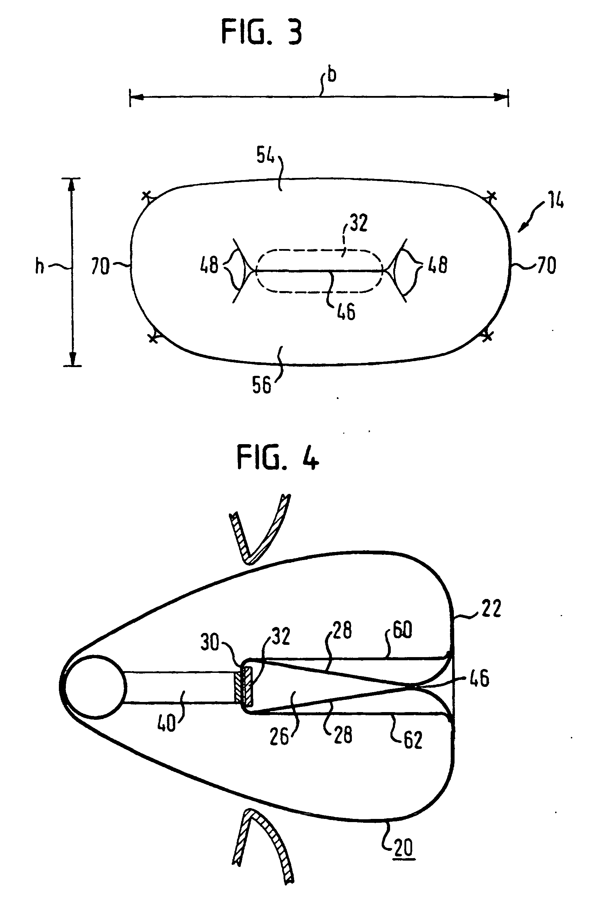

Wie in Fig. 3 zu erkennen ist, hat der Gassack vom Beifahrer aus gesehen eine Breite b, die die Höhe h des Gassacks deutlich überschreitet. Es ergibt sich damit eine fast ovale, vorzugsweise sogar ellipsenförmige von außen sichtbare Vorderwand. Die Einbuchtung 26 ist im aufgeblasenen Zustand ein, vom Beifahrer aus gesehen, langgestreckter horizontaler Schlitz 46, wobei die Einbuchtung 26 aber weitestgehend geschlossen ist, indem die gegenüberliegenden Abschnitte 28 der Gassackwandung einander berühren, was durch den Zuschnitt des Gassacks erreicht wird. Mit 48 sind lediglich seitlich möglicherweise entstehende Falten, die vom sich über einen Teil der Breite b erstreckenden Schlitz 46 ausgehen, bezeichnet. Zum Zentrumsabschnitt 30 kann die Einbuchtung 26 auch einen kreisringförmigen Wandquerschnitt haben. An der Ausmündung zum ringförmigen, von außen sichtbaren Teil der Vorderwand 22 ist die Einbuchtung schlitzartig ausgeführt und von außen auch nur als Schlitz oder Falte zu erkennen.

Die Wirkungsweise der Schutzeinrichtung wird im folgenden erläutert. Bei einem Frontalaufprall wird der Gasgenerator 18 aktiviert, und Gas wird sich im Inneren des Gassacks 16 ausbreiten. Der Gassack, welcher im wesentlichen oval um die Brücke 40 und das Mittelteil 32 herum gefaltet ist, wird aufgeblasen und drückt die Klappenabschnitte 34, 36 nach außen, so daß eine ringförmige, z.B. oval-ringförmige Austrittsöffnung 50 entsteht, über die der Gassack großteils das Modul verläßt. Der Zentrumsabschnitt 30 wird jedoch an jeglicher Bewegung beim Aufblasvorgang gehindert, so daß sich die schlitzartig ausmündende Einbuchtung 26 ergibt. Der Gassack wird sich zu Beginn des Entfaltungsvorgangs im wesentlichen schräg radial nach außen entfalten. Schließlich werden am Ende des Aufblasvorgangs, wenn die ringförmige Kammer 52 fast vollständig aufgeblasen ist, sich der obere und untere Teil 54, 56 der Kammer 52 aufeinander zu bewegen und die Einbuchtung 26 schließen, so daß nur noch der Schlitz 46 zu sehen ist, d.h., es muß nicht zwingend eine Öffnung zwischen der Umgebung und dem Inneren der Einbuchtung 26 vorhanden sein.

Bei den in den Fig. 4 bis 6 gezeigten Ausführungsformen werden, sofern Teile mit bereits erläuterten Teilen funktionsgleich sind, auch gleiche Bezugszeichen verwendet.

Die Ausführungsform nach Fig. 4 unterscheidet sich von der vorhergehenden dadurch, daß unmittelbar angrenzend an diejenigen Abschnitte 28 der Wandung des Gassacks, die die Einbuchtung 26 bilden, im Inneren des Gassacks 16 Fangbänder 60, 62 vorgesehen sind. Die Fangbänder sind mit ihren Enden einerseits an der Vorderwand 22 und andererseits am Zentrumsabschnitt 30 befestigt. Ihre Länge ist deutlich kürzer als der Abstand ihrer Befestigungsstellen an der Gassackwand gewählt, so daß die Abschnitte 28 nicht der Begrenzung des Gassacks 16 in der Tiefe dienen, sondern sich aufeinander zu bewegen können, um die Einbuchtung 26 nahe an der Vorderwand 22 zu schließen.

Der Gassack der gezeigten Schutzeinrichtung kann auf verschiedene Weise hergestellt sein. Beispielsweise, entsprechend der Ausführungsformen nach den Fig. 1 bis 4, kann sich eine durchgehende Gewebebahn, im Schnitt nach Fig. 2 betrachtet, von hinter dem Gasgenerator 18 aus nach oben erstrecken, um die Rückwand 24, den oberen Teil der Vorderwand 22, den oberen Abschnitt 28 der Einbuchtung 26, den Zentrumsabschnitt 30, den unteren Abschnitt 28 der Einbuchtung 26, den unteren Teil der Vorderwand 22 und die untere Rückwand 24 zu bilden. Seitenwände 70 werden zu beiden Seiten der Gewebebahn mit dieser verbunden, um den Gassack zu schließen.

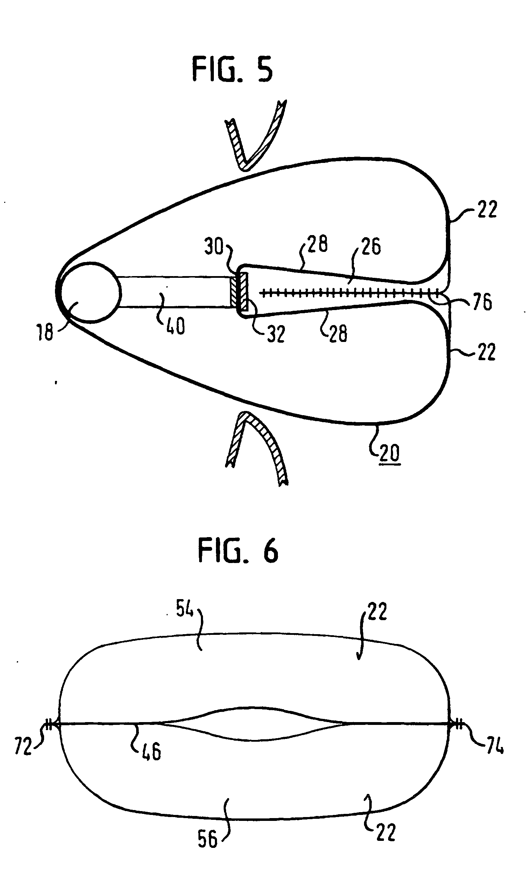

Alternativ kann aber die durchgehende Gewebebahn, wie in Fig. 5 dargestellt ist, auch an den Rändern 72, 74 durch Vernähen geschlossen sein. Mit 76 ist eine entsprechende Naht in Fig. 5 gezeigt. Ein solcher Gassack hat die in den Fig. 5 und 6 gezeigte Gestalt, mit einem über die gesamte Breite b erstreckenden Schlitz 46, der an manchen Stellen leicht geöffnet sein kann, über den weitaus größten Teil seiner Längserstreckung aber geschlossen ist.

Die Brücke 40 könnte auch deformierbar sein, d.h., bei einem Sekundäraufprall nach Zusammenfallen des Gassacks Energie aufnehmen, indem z.B. die Brücke aus zick-zack-förmigen Blechen gebildet ist.

## Patentansprüche

1. Beifahrer-Gassack-Schutzeinrichtung, mit
einem Gassack (16), der eine, bezogen auf den aufgeblasenen Zustand, Vorderwand (22) hat, auf die der Beifahrer (P) bei einem Unfall trifft,
wobei die Vorderwand (22) im aufgeblasenen Zustand eine Einbuchtung (26) hat,
wobei die Einbuchtung (26) dadurch gebildet ist, daß ein Zentrumsabschnitt (30) der Vorderwand (22) mittels einer Rückhalteeinrichtung beim Aufblasen des Gassacks (16) an einer Bewegung gehindert wird,
**dadurch gekennzeichnet, daß**
der Gassack (16) vom Beifahrer aus gesehen eine im aufgeblasenen Zustand ovale Außenkontur hat, deren Breite (b) deren Höhe (h) deutlich überschreitet, und
daß die Einbuchtung (26) schlitzartig nach außen auslaufend ausgebildet ist,
wobei der Schlitz (46) in Richtung der Breite (b) des Gassacks (16) verläuft.

2. Schutzeinrichtung nach Anspruch 1, **dadurch gekennzeichnet, daß** der Gassack (16) Teil eines Gassack-Moduls ist, welches von einer Modulabdeckung (12) verschlossen ist, die beim Aufblasen des Gassacks (16) geöffnet wird, und daß der Zentrumsabschnitt (30) unterhalb eines Teils der Modulabdeckung (12) am Modul mittels der Rückhalteeinrichtung befestigt ist.

3. Schutzeinrichtung nach Anspruch 2, **dadurch gekennzeichnet, daß** die Modulabdeckung (12) beim Aufblasen des Gassacks eine ringförmige Austrittsöffnung (50) für den Gassack (16) freigibt.

4. Schutzeinrichtung nach Anspruch 2 oder 3, **dadurch gekennzeichnet, daß** die Modulabdeckung (12) aus einem feststehenden Mittelteil (32) und wenigstens zwei das Mittelteil (32) umschließenden Klappenabschnitten (34, 36) besteht.

5. Schutzeinrichtung nach einem der vorhergehenden Ansprüche, **dadurch gekennzeichnet, daß** der Gassack (16) durch eine Gassackwand definiert ist, die die Vorderwand (22) aufweist, wobei die Gassackwand wenigstens teilweise durch eine durchgehende Gewebebahn gebildet ist, die die Rückwand (24), die Vorderwand (22) samt Einbuchtung (26) bildet und die seitlich geschlossen ist.

6. Schutzeinrichtung nach Anspruch 5, **dadurch gekennzeichnet, daß** die durchgehende Gewebebahn seitlich durch Vernähen ihrer Ränder (72, 74) geschlossen ist.

7. Schutzeinrichtung nach Anspruch 5, **dadurch gekennzeichnet, daß** die durchgehende Gewebebahn durch separate, mit ihr verbundene Seitenwände (70) seitlich geschlossen ist.

8. Schutzeinrichtung nach einem der vorhergehenden Ansprüche, **dadurch gekennzeichnet, daß** an die Einbuchtung (26) angrenzende, im Inneren des Gassacks (16) vorgesehene Fangbänder (60, 62) vorgesehen sind, die so kurz sind, daß gegenüberliegende, die Einbuchtung (26) bildende Abschnitte (28) der Gassackwand aneinanderliegen und die Einbuchtung (26) wenigstens abschnittsweise schließen.

## Claims

1. A front passenger gas bag protection device, comprising
a gas bag (16) which, as related to the inflated state, has a front wall (22) for impact of the front passenger (P) in the case of an accident,
the front wall (22), in the inflated state, having an indentation (26),
the indentation (26) being formed in that during inflation of the gas bag (16) a center section (30) of the front wall (22) is prevented from movement by means of a restraint device,
**characterized in that**
the gas bag (16), as viewed from the front passenger, has an outer contour which is oval in the inflated state and the width (b) of which distinctly exceeds the height (h) thereof, and
that the indentation (26) is configured so as to open out to the exterior in the manner of a slit,
the slit (46) extending in the direction of the width (b) of the gas bag (16).

2. The protection device according to Claim 1, **characterized in that** the gas bag (16) is part of a gas bag module which is closed by a module covering (12) which is opened during inflation of the gas bag (16), and that the center section (30) is fastened to the module beneath a part of the module covering (12) by means of the restraint device.

3. The protection device according to Claim 2, **characterized in that** during inflation of the gas bag, the module covering (12) exposes an annular outlet opening (50) for the gas bag (16).

4. The protection device according to Claim 2 or 3, **characterized in that** the module covering (12) consists of a fixed central part (32) and at least two flap sections (34, 36) surrounding the central part (32).

5. The protection device according to any of the preceding claims, **characterized in that** the gas bag (16) is defined by a gas bag wall which has the front wall (22), at least part of the gas bag wall being formed by a continuous web of fabric which forms the rear wall (24), the front wall (22) together with the indentation (26), and which is closed at the sides.

6. The protection device according to Claim 5, **characterized in that** the continuous web of fabric is closed at the sides by its edges (72, 74) being sewn.

7. The protection device according to Claim 5, **characterized in that** the continuous web of fabric is closed at the sides by separate side walls (70) connected with it.

8. The protection device according to any of the preceding claims, **characterized in that** limiting straps (60, 62) are provided, adjoining the indentation (26) and provided inside the gas bag (16), which are so short that opposite sections (28) of the gas bag wall, forming the indentation (26), lie against each other and close the indentation (26) at least in sections.

## Revendications

1. Dispositif de protection à coussin à gaz de passager avant, comportant
un coussin à gaz (16) qui, à l'état de gonflage, a une paroi antérieure (22) sur laquelle tombe le passager avant (P) en cas d'accident,
la paroi antérieure (22) ayant un creux (26) à l'état de gonflage,
le creux (26) étant formé par le fait que pendant le gonflage du coussin à gaz, un dispositif de retenue empêche qu'un tronçon central (30) de la paroi antérieure (22) se déplace,
**caractérisé en ce que**
le coussin à gaz (16), vu depuis le passager avant, a un contour extérieur ovale à l'état de gonflage, dont la largeur (b) dépasse nettement sa hauteur (h), et
**en ce que** le creux (26) est réalisé en se terminant en forme de fente vers l'extérieur,
la fente (46) s'étendant en direction de la largeur (b) du coussin à gaz (16).

2. Dispositif de protection selon la revendication 1, **caractérisé en ce que** le coussin à gaz (16) fait partie d'un module de coussin à gaz qui est fermé par un couvercle de module (12) qui est ouvert lors du gonflage du coussin à gaz (16), et **en ce que** le tronçon central (30) est fixé sur le module, au-dessous d'une partie du couvercle de module (12), au moyen du dispositif de retenue.

3. Dispositif de protection selon la revendication 2, **caractérisé en ce que** le couvercle de module (12) libère lors du gonflage du coussin à gaz un orifice de sortie (50) de forme annulaire pour le coussin à gaz (16).

4. Dispositif de protection selon la revendication 2 ou 3, **caractérisé en ce que** le couvercle de module (12) est constitué par une partie médiane (32) fixe et par au moins deux tronçons en forme de volets (34, 36) entourant la partie médiane (32).

5. Dispositif de protection selon l'une des revendications précédentes, **caractérisé en ce que** le coussin à gaz (16) est défini par une paroi de coussin à gaz qui présente la paroi antérieure (22), la paroi de coussin à gaz étant formée au moins partiellement par une bande de tissu continue qui forme la paroi postérieure (24), la paroi antérieure (22) conjointement avec le creux (26) et qui est fermée latéralement.

6. Dispositif de protection selon la revendication 5, **caractérisé en ce que** la bande de tissu continue est fermée latéralement par ses bords (72, 74) cousus l'un avec l'autre.

7. Dispositif de protection selon la revendication 5, **caractérisé en ce que** la bande de tissu continue est fermée latéralement par des parois latérales (70) séparées qui sont reliées à celle-ci.

8. Dispositif de protection selon l'une des revendications précédentes, **caractérisé en ce qu'**il est prévu des bandes de garde (60, 62) adjacentes au creux (26) et prévues à l'intérieur du coussin à gaz (16), qui sont si courtes que des tronçons (28) opposés de la paroi de coussin à gaz, qui forment le creux (26), reposent l'un contre l'autre et ferment le creux (26) au moins par tronçons.
